(19) Europäisches Patentamt
European Patent Office
Office européen des brevets

(11) **EP 3 045 877 B1**

(12) **EUROPÄISCHE PATENTSCHRIFT**

(45) Veröffentlichungstag und Bekanntmachung des Hinweises auf die Patenterteilung:
**26.09.2018   Patentblatt 2018/39**

(51) Int Cl.:
**G01F 1/84** (2006.01)      **G01F 15/02** (2006.01)

(21) Anmeldenummer: **15195810.5**

(22) Anmeldetag: **23.11.2015**

(54) **VERFAHREN ZUM BETREIBEN EINES CORIOLIS-MASSEDURCHFLUSSMESSGERÄTS**

METHOD FOR OPERATING A CORIOLIS MASS FLOW MEASURING DEVICE

PROCÉDÉ DE FONCTIONNEMENT D'UN APPAREIL DE MESURE DE DÉBIT MASSIQUE CORIOLIS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.01.2015   DE 102015100573**

(43) Veröffentlichungstag der Anmeldung:
**20.07.2016   Patentblatt 2016/29**

(73) Patentinhaber: **Krohne AG**
**4019 Basel (CH)**

(72) Erfinder: **Wang, Tao**
**Rough Common, Canterburry, Kent CT2 9DG (GB)**

(74) Vertreter: **Gesthuysen Patent- und Rechtsanwälte**
**Patentanwälte**
**Huyssenallee 100**
**45128 Essen (DE)**

(56) Entgegenhaltungen:
**WO-A1-98/31990        WO-A1-2012/018323**
**WO-A1-2012/067608     JP-A- 2008 064 544**
**US-A- 5 460 049        US-A1- 2004 221 660**

EP 3 045 877 B1

**Beschreibung**

Die Erfindung betrifft ein Verfahren zum Betreiben eines Coriolis-Massedurchflussmessgeräts, wobei das Coriolis-Massedurchflussmessgerät wenigstens ein Messrohr, wenigstens einen Schwingungserzeuger, wenigstens zwei Schwingungsaufnehmer und wenigstens eine Auswerteeinrichtung aufweist, wobei die Schwingungsaufnehmer und/oder der Schwingungserzeuger jeweils mindestens einen Permanentmagneten und jeweils mindestens eine Spule umfassen, wobei der Schwingungserzeuger das Messrohr zu Schwingungen anregt, wobei die Schwingungsaufnehmer die Schwingungen des Messrohrs erfassen, wobei die Temperatur des Messrohrs bestimmt wird und wobei die Auswerteeinrichtung die erfassten Schwingungssignale verarbeitet und Zustandsgrößen des Coriolis-Massedurchflussmessgeräts bestimmt.

Coriolis-Massedurchflussmessgeräte sind im Stand der Technik in einer Vielzahl von Ausgestaltungen bekannt. Massedurchflussmessgeräte, die nach dem Coriolis-Prinzip arbeiten, weisen wenigstens einen Schwingungserzeuger, mit dem das Messrohr zur Schwingung angeregt wird - oder ggf. auch mehrere Messrohre zur Schwingung angeregt werden -, sowie wenigstens zwei Schwingungsaufnehmer, mit denen die erzielte Schwingung oder die erzielten Schwingungen des Messrohrs erfasst werden, auf. Die Schwingungsaufnehmer sind ein- und auslaufseitig an dem Messrohr befestigt. Wird das Messrohr in Schwingung versetzt, ergeben sich, für den Fall, dass ein massebehaftetes Medium durch das Messrohr fließt, ein- und auslaufseitig gegenläufig beeinflusste Schwingungsanteile, die von den Schwingungsaufnehmern erfasst werden. Ohne Durchfluss sind die Signale der beiden Schwingungsaufnehmer im Idealfall phasengleich. Der Grund für die mit zunehmendem Massedurchfluss ein- und auslaufseitig resultierenden zunehmenden unterschiedlichen Schwingungsanteile sind ein- und auslaufseitig unterschiedlich gerichtete Corioliskräfte auf das strömende Medium.

Schwingungserzeuger von Coriolis-Massedurchflussmessgeräten der vorgenannten Art umfassen eine Spule und einen Permanentmagneten. Der Permanentmagnet ist jedenfalls so im Einflussbereich der Spule angeordnet, dass das bei Bestromung der Spule erzeugte Magnetfeld mit dem Magnetfeld des Permanentmagneten wechselwirkt und entsprechende Kräfte auf Spule und Permanentmagneten wirken. Die Höhe des elektrischen Stroms, mit dem die Spule beaufschlagt wird, ist dabei maßgebend für die Kraft, die vom Schwingungserzeuger auf das Messrohr übertragen wird und die das Messrohr zu Schwingungen anregt; die Bestromung der Spule erfolgt im Regelfall harmonisch und damit auch die Kraftbeaufschlagung des Messrohrs. Wenn das Coriolis-Massedurchflussmessgerät als ein dynamisches System mit der Eingangsgröße Anregungskraft und der Ausgangsgröße Messrohrauslenkung - oder eine davon zeitlich abgeleitete Größe wie die Messrohrgeschwindigkeit - betrachtet wird, dann liegen bei bekannter Anregungskraft und messtechnisch erfasster Messrohrgeschwindigkeit Informationen zur Identifikation des Übertragungsverhaltens des dynamischen Systems Coriolis-Massedurchflussmessgerät vor. Wenn die Identifikation auf Grundlage eines mathematischen Modells erfolgt, ist es möglich, in dem Modell verwendete Parameter zu bestimmen, wie beispielsweise die Federsteifigkeit des Messrohrs, die Dämpfung des Messrohrs und die schwingende Gesamtmasse (DE 10 2012 011 934 A1, DE 10 2008 059 920 A1).

Die WO 2012/018323 A1 beschreibt ein Verfahren zum Betrieb eines Coriolis-Massedurchflussmessgerätes mit zwei Messrohren, einem Schwingungserzeuger und zwei Schwingungsaufnehmern, wobei die Schwingungsaufnehmer und der Schwingungserzeuger jeweils einen Permanentmagneten und jeweils eine Spule umfassen. In dem Verfahren wird die Temperatur des Messrohrs bestimmt und es werden ferner die elektrischen Impedanzen der Spulen des Schwingungserzeugers und der Schwingungsaufnehmer ermittelt sowie temperaturabhängige Zustandsgrößen berechnet.

Die physikalischen Parameter und damit auch die funktionalen Zusammenhänge unterliegen jedoch oft weiteren Einflüssen, die im Idealfall berücksichtigt werden sollten, um genaue Messergebnisse zu erhalten. So ist beispielsweise die Steifigkeit des Messrohrs unter anderem temperaturabhängig. Aus dem Stand der Technik sind der Anmelderin Verfahren bekannt, bei denen die Messrohrtemperatur durch einen auf dem Messrohr angebrachten Sensor gemessen wird, um beispielsweise die Temperaturabhängigkeit der Federsteifigkeit des Messrohrs berücksichtigen zu können.

Der Erfindung liegt daher die Aufgabe zugrunde, ein Verfahren zum Betreiben eines Coriolis-Massedurchflussmessgeräts anzugeben, das bei der Bestimmung von Zustandsgrößen bzw. von Werten für Zustandsgrößen eine höhere Genauigkeit aufweist.

Die zuvor hergeleitete Aufgabe ist bei einem gattungsgemäßen Verfahren zum Betreiben eines Coriolis-Massedurchflussmessgeräts dadurch gelöst, dass die elektrische Impedanz der Spule des Schwingungserzeugers und/oder die elektrische Impedanz wenigstens einer Spule der Schwingungsaufnehmer ermittelt wird und dass die Auswerteeinrichtung mindestens eine temperaturabhängige Zustandsgröße D berechnet, wobei die temperaturabhängige Zustandsgröße D unter Verwendung der bestimmten Temperatur des Messrohrs und für eine Kompensation des Einflusses der Temperatur des Permanentmagneten mit der bestimmten Impedanz der Spule berechnet wird. Dabei ist die erfasste Impedanz der Spule ein zuverlässiger Indikator für die Temperatur der Spule und für die Temperatur des in unmittelbarer Nähe vorgesehenen Permanentmagneten. Bei der Zustandsgröße D kann es sich um eine technisch-physikalische Größe des Coriolis-Massedurchflussmessgeräts handeln, es kann sich aber auch um eine fiktive charakteristische Größen handeln, die beispielsweise zur Überwachung eines Gutzustandes des jeweiligen Coriolis-Massedurchflussmessgerätes geeignet ist; eine solche fiktive charakteristische Größe könnte in Zusammenhang mit der Federsteifigkeit des Messrohrs stehen, ohne die Federsteifigkeit selbst exakt abzubilden.

Das erfindungsgemäße Verfahren ermöglicht die Kompensation von Temperatureffekten, die in Zusammenhang mit der Temperaturabhängigkeit der Magnetisierung der hier verwendeten Permanentmagneten stehen. Für kleine Temperaturen, also Temperaturen unterhalb der Curie-Temperatur, ist beispielsweise der folgende gleichungsmäßige Zusammenhang nach Bloch bekannt:

$$\frac{M(T)}{M(0)} = 1 - \left(\frac{T}{T_C}\right)^{3/2}$$

M(T) ist die Magnetisierung eines Permanentmagneten, M(0) die Magnetisierung beim Temperaturnullpunkt. Mit T wird die Temperatur und $T_c$ die Curie-Temperatur bezeichnet. Da die Stärke des Magneten - seine spontane Magnetisierung - maßgeblich für die vom Schwingungserzeuger übertragene Kraft ist, beeinflusst auch die Magnettemperatur die Genauigkeit eines berechneten Parameters oder einer Zustandsgröße.

Bei dem erfindungsgemäßen Verfahren ist es nicht notwendig, auf kompliziertem Weg die Magnettemperatur zu messen. Der Spulenwiderstand, bzw. die elektrische Impedanz der Spule liefert einen Zusammenhang, der eine Kompensation des Einflusses der Magnettemperatur erlaubt. Vorteilhaft ist hier, dass die Spule, deren Impedanz erfasst wird, funktionsnotwendig in unmittelbarer Umgebung des ihr zugeordneten Permanentmagneten angeordnet ist und demzufolge die Temperatur der Spule in guter Näherung der Temperatur des Permanentmagneten entspricht. Da die Impedanz bzw. der ohmsche Widerstand der Spule im Regelfall ebenfalls temperaturveränderlich sind, ist die erfasste Impedanz der Spule ein zuverlässiger Indikator für die Temperatur der Spule und für die Temperatur des in unmittelbarer Nähe vorgesehenen Permanentmagneten.

Für eine Erhöhung der Genauigkeit ist in einer erweiterten Ausgestaltung des Verfahrens vorgesehen, dass eine Korrektur der Zustandsgröße D auf Basis wenigstens eines bekannten Temperaturkoeffizienten zur Beschreibung der Temperaturabhängigkeit der Spule erfolgt. Durch Nutzung dieses Sachverhalts kann unmittelbar durch Messung der Spulenimpedanz oder des Ohmschen Widerstands der Spule auf die Temperatur der Spule geschlossen werden. So ist durch die Bestimmung der Spulenimpedanz eine genauere Bestimmung der Spulentemperatur bzw. der Temperatur des Permanentmagneten und damit eine bessere Kompensation von Effekten möglich, die in Zusammenhang mit der Magnettemperatur stehen.

Eine weitere Ausgestaltung des erfindungsgemäßen Verfahrens sieht vor, dass ein Referenzwert $D_{ref}$ der Zustandsgröße D vor Inbetriebnahme des Coriolis-Massedurchflussmessgeräts im laufenden Prozess bestimmt wird. Vor Inbetriebnahme kann bedeuten, dass das Gerät bereits ab Werk mit einem Referenzwert kalibriert wird. Dieser kann im Gerät vor Auslieferung gespeichert sein. Ebenso ist es denkbar, dass der Referenzwert in Einbausituation im Prozess vor Ort bestimmt wird, wenn das Coriolis-Massedurchflussmessgerät bereits in den Prozess integriert, jedoch noch nicht in Betrieb genommen wurde. Außerdem ist es sinnvoll, dass das Gerät auch bei einem Wechsel der Prozessbedingungen neu kalibriert wird, d. h. ein neuer Referenzwert berechnet werden kann. Wechselnde Prozessbedingungen können bedingt sein durch einen Ausbau des Geräts oder die Integration des Geräts in einen neuen Prozess oder beispielsweise auch durch Änderung des durchströmenden Mediums.

In einer erweiterten Ausgestaltung des Verfahrens ist vorgesehen, dass der Referenzwert $D_{ref}$ mit einem im Betrieb bestimmten Wert $D_{mess}$ der Zustandsgröße D verglichen wird. Der im Betrieb bestimmte Wert $D_{mess}$ kann in beliebigen Intervallen oder kontinuierlich bestimmt werden. Der fortlaufende Vergleich mit dem Referenzwert $D_{ref}$ ermöglicht es Aussagen darüber zu treffen, inwieweit der aktuelle Zustand des Coriolis-Massedurchflussmessgeräts dem Ursprungszustand zum Zeitpunkt der Referenzwertbestimmung entspricht.

In einer weiteren Ausgestaltung des Verfahrens ist vorgesehen, dass bei Überschreiten einer zuvor definierten Abweichung E des Referenzwertes $D_{ref}$ von dem im Betrieb ermittelten Wert $D_{mess}$ der Zustandsgröße D ein Signal von der Auswerteeinrichtung ausgegeben wird. Bei dem Signal kann es sich schlicht um das Setzen eines Flags handeln, also beispielsweise das Setzen eines Bits in einer Speicherzelle innerhalb der Elektronik des Coriolis-Massedurchflussmessgeräts. Das Signal kann aber auch elektrisch, akustisch oder mittels einer Visualisierung über eine Schnittstelle des Coriolis-Massedurchflussmessgeräts ausgegeben werden. Insbesondere können die Signale nachfolgend auch in einer übergeordneten Leitwarte ausgegeben werden, die dem Betreiber verdeutlichen, dass sich der Zustand des Messgeräts verändert hat, beispielsweise ein Gutzustand nicht mehr vorliegt.

Die Berechnung der temperaturabhängigen Zustandsgröße D und damit auch der Werte $D_{ref}$ und/oder $D_{mess}$ der Zustandsgröße D erfolgt bevorzugt in Abhängigkeit von der Messrohrtemperatur T und der erfassten Spulenimpedanz $R_{drv}$, also nach einem Zusammenhang der Form $D = f(T, R_{drv})$. Vorzugsweise erfolgt die Bestimmung jeweils bezogen auf einen Referenz-Temperaturwert $T_0$ und einen Referenz-Impedanzwert $R_{drv,0}$, dann also nach einem Zusammenhang der Form $D = f(\Delta T, \Delta R_{drv})$.

Die Berechnung der temperaturabhängigen Werte $D_{ref}$ und/oder $D_{mess}$ der Zustandsgröße D werden in einer Ausgestaltung des erfindungsgemäßen Verfahrens unter Verwendung des folgenden Zusammenhangs bestimmt:

$$D = a_1 + a_2\Delta T + a_3\Delta R_{drv}.$$

$\Delta R_{drv}$ entspricht dabei der Änderung der elektrischen Impedanz der Spule bezogen auf einen vorher definierten Referenzwert $R_{drv,0}$ und $\Delta T$ der Änderung der Messrohrtemperatur bezogen auf einen zuvor bestimmten Referenzwert $T_0$. Die Koeffizienten $a_1$ bis $a_3$, mit $a_i \in \mathbb{R}$, können empirischer Natur sein und sich beispielsweise lediglich auf ein individuelles Messgerät oder auch auf einen bestimmten Typ eines Messgeräts beziehen.

Die aus dem Schwingverhalten abgeleiteten Zustandsgrößen geben Auskunft auf die strukturelle Beschaffenheit des Coriolis-Massedurchflussmessgeräts. Das Schwingverhalten eines Coriolis-Massedurchflussmessgeräts kann mathematisch grundsätzlich durch eine Lagrange-Gleichung 2. Art beschrieben werden. Dabei stellt eine Schwingung in der ersten Eigenform, also einer Anregung des Messrohrs zu Schwingungen bei größtmöglicher Amplitude, wobei eine Deformation oder sogar eine Zerstörung des Messrohrs vermieden wird, eine gleichphasige, translatorische Bewegung der Massen des Messrohrs dar. Eine Rotation der Massen um den Mittelpunkt des Messrohrs entspricht einer Schwingung in der zweiten Eigenform. Alle betrachteten Eigenformen können in einem Differentialgleichungssystem dargestellt werden, wobei die entscheidenden Faktoren die Trägheitsmatrix, die Dämpfungsmatrix und die Steifigkeitsmatrix sind.

Daher ist es in einer Ausgestaltung des erfindungsgemäßen Verfahrens zum Betreiben eines Coriolis-Massedurchflussmessgerät besonders vorteilhaft, dass die Zustandsgrößen D in Abhängigkeit von der Steifigkeit des Messrohrs berechnet werden. Eine Aussage über die Steifigkeit ergibt eine gute Näherung zur Lebensdauer und Funktionalität des Coriolis-Massedurchflussmessgeräts.

Ebenso ist es in einer weiteren Ausgestaltung des erfindungsgemäßen Verfahrens vorteilhaft, dass die Zustandsgrößen in Abhängigkeit von der Dämpfung des Messrohrs berechnet werden.

In einer weiteren Ausgestaltung des Verfahrens ist entsprechend vorgesehen, dass die Zustandsgrößen in Abhängigkeit von der Masse des Messrohrs berechnet werden.

Bei der Berechnung der Zustandsgrößen kommt es darauf an, inwieweit das Messrohr des Coriolis-Massedurchflussmessgeräts zu Schwingungen bzw. in welcher Eigenform es zu Schwingungen angeregt wird. Für die Identifikation einer Zustandsgröße in Abhängigkeit von der Steifigkeit des Messrohrs wird die Schwingung vorzugsweise im "drive mode" erzeugt, was einer Schwingung in der ersten Eigenform entspricht.

Im Einzelnen gibt nun eine Vielzahl von Möglichkeiten das erfindungsgemäße Verfahren zum Betreiben eines Coriolis-Massedurchflussmessgeräts auszugestalten und weiterzubilden. Dazu wird verwiesen sowohl auf die dem Patentanspruch 1 nachgeordneten Patentansprüche als auch auf die nachfolgende Beschreibung von bevorzugten Ausführungsbeispielen in Verbindung mit der Zeichnung. In der Zeichnung zeigen:

Fig. 1 ein Ausführungsbeispiel eines Coriolis-Massedurchflussmessgeräts in perspektivischer Ansicht,

Fig. 2 den schematischen Verlauf der Abhängigkeit der elektrischen Impedanz der Spule von der Messrohrtemperatur bei stationären Bedingungen,

Fig. 3 den schematischen Verlauf der Abhängigkeit der elektrischen Impedanz der Spule von der Messrohrtemperatur bei instationären Bedingungen,

Fig. 4 den schematischen Ablauf einer Ausgestaltung des Verfahrens zum Betreiben eines Coriolis-Massedurchflussmessgeräts,

Fig. 5 den schematischen Ablauf einer erweiterten Ausgestaltung des Verfahrens zum Betreiben eines Coriolis-Massedurchflussmessgeräts,

Fig. 6 den schematischen Ablauf einer weiteren Ausgestaltung des Verfahrens zum Betreiben eines Coriolis-Massedurchflussmessgeräts.

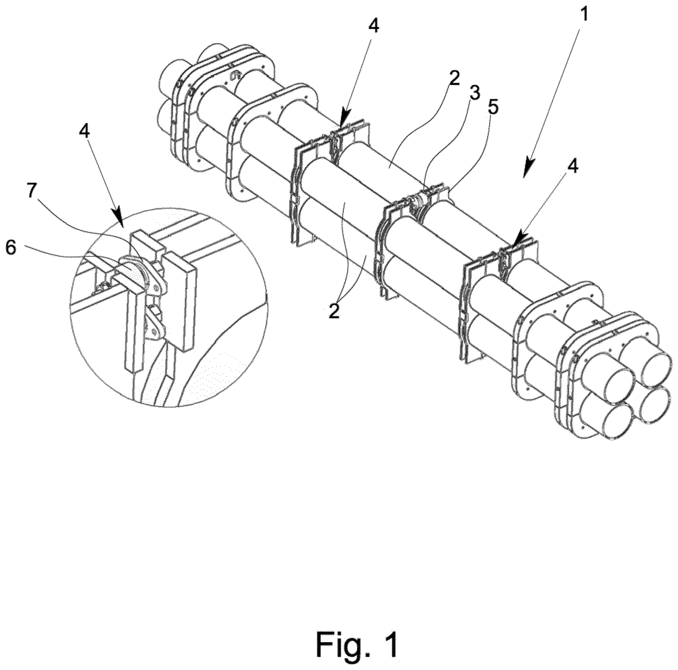

Fig. 1 zeigt ein Ausführungsbeispiel eines Coriolis-Massedurchflussmessgeräts 1 mit vier Messrohren 2. Mittels gesonderter Haltevorrichtungen sind Schwingungserzeuger 3 und Schwingungsaufnehmer 4 mit den Messrohren 2 verbunden. In diesem Fall umfassen sowohl die Schwingungsaufnehmer 4 als auch der Schwingungserzeuger 3 jeweils einen Permanentmagneten 6 sowie eine Spule 7. Auf diese Weise können auf elektrischem Wege Schwingungen auf die Messrohre 2 übertragen bzw. Schwingungen der Messrohre 2 erfasst werden. Die Schwingungsaufnehmer 4 sind ein- und auslaufseitig an dem Messrohr 2 befestigt. Ohne Durchfluss sind die Signale der beiden Schwingungsaufnehmer 4 im Wesentlichen phasengleich. Bei einem Massedurchfluss ergibt sich ein- und auslaufseitig eine unterschiedlich gerichtete Corioliskraft, die zu einer Phasenverschiebung zwischen den Auslenkungen und damit der beiden Signale der Schwingungsaufnehmer 4 führt, wobei die Phasenverschiebung proportional dem Massedurchfluss innerhalb des Messrohres 2 ist.

Die Schwingverhalten des Messrohrs 2 hängt allerdings nicht nur von der Anregung des Messrohrs 2 ab, sondern auch von der Messrohrtemperatur, die sich auf die Steifigkeit des Messrohrs auswirkt, von einer möglichen strukturellen Veränderung des Messrohrs 2, beispielsweise durch Korrosion, oder auch von der Temperaturabhängigkeit des Übertragungsverhaltens des Schwingungserzeugers 3. Bei dem Betrieb eines Coriolis-Massedurchflussmessgeräts besteht deshalb der Wunsch, auch derartige Temperatureffekte zu kompensieren, sei es bei der Bestimmung physikalischer Parameter des Coriolis-Massedurchflussmessgeräts, bei physikalischen Zustandsgrößen oder bei abgeleiteten Zustandsgrößen D, die keine unmittelbare physikalische Bedeutung haben müssen, gleichwohl aber geeignet sind, den Zustand und damit auch eine Veränderung des Zustands des Coriolis-Massedurchflussmessgeräts zu ermitteln.

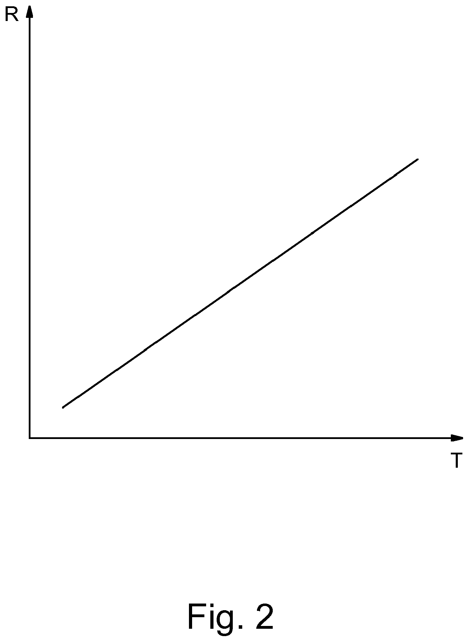

Fig. 2 zeigt eine qualitative Darstellung der Spulenimpedanz R gegen die Messrohrtemperatur T bei stationären Bedingungen. Im stationären Fall d.h. bei konstanter Messrohrtemperatur, existiert ein linearer Zusammenhang zwischen der Spulenimpedanz R und der Messrohrtemperatur T.

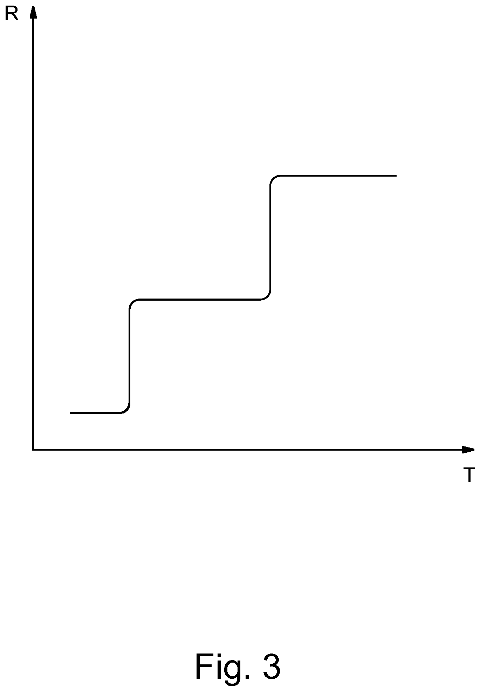

Im Gegensatz dazu zeigt Fig. 3 eine qualitative Darstellung der Spulenimpedanz R gegen die Messrohrtemperatur T bei thermisch instationären Bedingungen, also bei veränderlicher Messrohrtemperatur. Eine Veränderung der Messrohrtemperatur T (horizontal) führt zu einer deutlich verzögerten Reaktion der Spulenimpedanz R. Dieser verzögerte Nachlauf führt zu typischen Hystereseeffekten sowohl bei einem Temperaturanstieg wie auch bei Abkühlvorgängen. Daraus resultiert insgesamt die Erkenntnis, dass temperaturabhängige Effekte beim Schwingungserzeuger 3 nur unzureichend mit einer erfassten Temperatur des Messrohrs 2 kompensierbar sind und umgekehrt, dass temperaturabhängige Effekte des Messrohrs 2 nur unzureichend mit einer erfassten Temperatur des Schwingungserzeugers 3 kompensierbar sind. Das vorgeschlagene Verfahren zum Betrieb eine Coriolis-Durchflussmessgeräts begegnet diesem Umstand, indem die interessierende temperaturabhängige Zustandsgröße D ausgehend von der Temperatur des Messrohrs 2 mit der bestimmten Impedanz der Spule korrigiert wird, da in der Impedanz der Spule 7 eine Information über die Temperatur des benachbarten Permanentmagneten 6 enthalten ist.

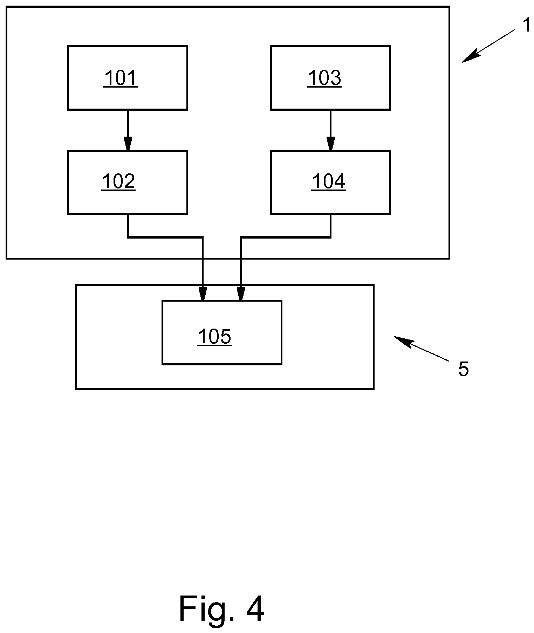

Fig. 4 zeigt den schematischen Ablauf einer Ausgestaltung des eingangs beschriebenen Verfahrens. Der an dem Coriolis-Massedurchflussmessgerät 1 angebrachte Schwingungserzeuger 3 regt die Messrohre 2 in einem ersten Schritt 101 zu Schwingungen an. Die Schwingungen werden anschließend von den Schwingungsaufnehmern 4 in Schritt 102 erfasst. Parallel dazu wird in Schritt 103 die Temperatur der Messrohre ermittelt. Im Anschluss wird die elektrische Impedanz der Spule bestimmt 104. Die Reihenfolge dieser Schritte ist nicht auf die in der Fig. 4 dargestellte Reihenfolge festgelegt. Schwingungserfassung, Messrohrtemperaturbestimmung und die Bestimmung der Spulenimpedanz sind nacheinander oder aber auch gleichzeitig durchführbar.

Die aufgenommenen Signale werden an eine Auswerteeinrichtung 5 weitergeleitet. Die Auswerteeinrichtung 5 berechnet mit den aufgenommenen Signalen eine oder mehrere Zustandsgrößen D des Coriolis-Massedurchflussmessgeräts 1. Da die bevorzugten Zustandsgrößen, die eine Auskunft über die aktuelle Beschaffenheit des Coriolis-Massedurchflussmessgeräts 1 geben können, teilweise temperaturabhängig sind, wird die Messrohrtemperatur für die Bestimmung des tatsächlichen temperaturabhängigen Zustandswertes verwendet.

Die resultierenden Messrohrschwingungen sind auch abhängig von der durch durch die Bestromung des Schwingungserzeugers aufgebrachten Anregungskraft. Die erzeugte Kraft ist wiederum abhängig von der Temperatur des Permanentmagneten 6, da dessen Magnetisierung temperaturabhängig ist. Insbesondere der Zusammenhang der in den Fig. 2 und Fig. 3 deutlich wird, veranlasst dazu, die Magnettemperatur bzw. eine Größe, die im Zusammenhang mit der Magnettemperatur oder zur näher gelegenen Spule steht, zu bestimmen. In diesem Ausführungsbeispiel der Erfindung weist die Spule 7 einen bekannten Temperaturkoeffizienten auf. Somit ist ein Zusammenhang zur Temperatur gegeben. Eine temperaturabhängige Zustandsgröße D wird dann in Schritt 105 von der Auswerteeinrichtung durch den Zusammenhang

$$D = a_1 + a_2 \Delta T + a_3 \Delta R_{drv}$$

berechnet. Dabei ist $\Delta T$ die Änderung der Messrohrtemperatur und $\Delta R_{drv}$ die Änderung der elektrischen Impedanz der Spule. Die Koeffizienten $a_1$ bis $a_3$ stellen empirische Parameter für das Coriolis-Massedurchflussmessgerät dar.

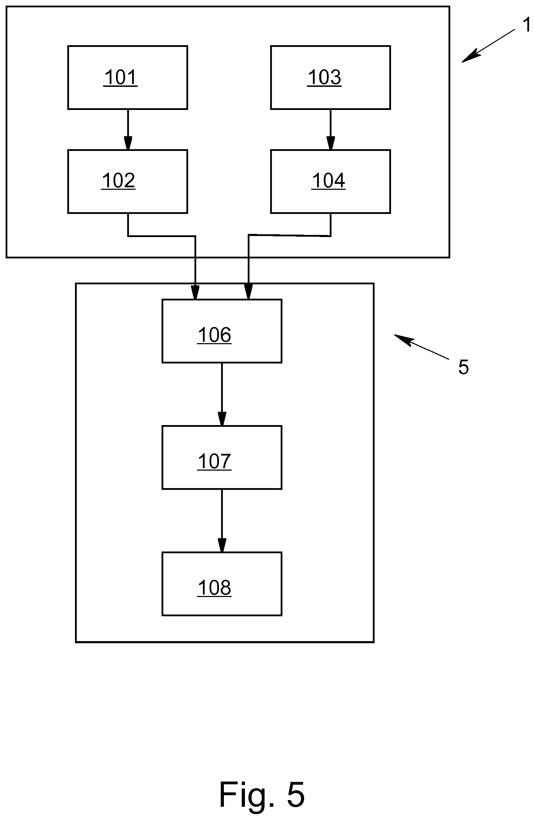

Fig. 5 zeigt eine Erweiterung des Verfahrens. Wie bereits in Fig. 4 dargestellt, werden in Schritt 101 Schwingungen erzeugt und diese anschließend aufgenommen 102. Ebenso werden die Messrohrtemperatur T und die elektrische Spulenimpedanz R bestimmt, damit die Auswerteeinrichtung 5 Zustandsgrößen aus den ermittelten Werten berechnen kann. In dem erweiterten Verfahren gemäß Fig. 5 wird zunächst in Schritt 106 ein Referenzwert $D_{ref}$ der Zustandsgröße D vor Inbetriebnahme des Coriolis-Massedurchflussmessgeräts 1 in Einbausituation bestimmt. Erst im laufenden Betrieb werden in Schritt 107 laufend Werte $D_{mess}$ der Zustandsgröße D aus den aufgenommenen Signalen berechnet. Die berechneten Werte $D_{mess}$ werden außerdem laufend mit dem zuvor bestimmten Referenzwert $D_{ref}$ verglichen 108.

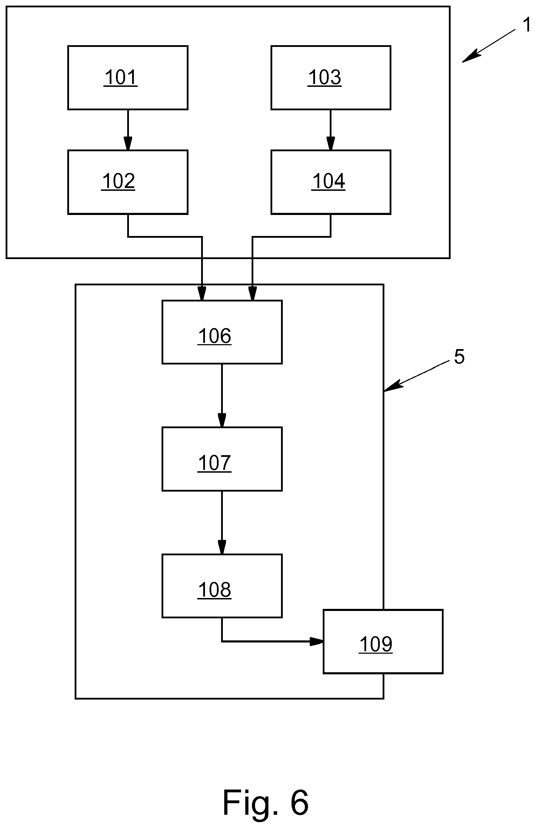

Fig. 6 zeigt ein weiteres Ausführungsbeispiel des Verfahrens zum Betreiben eines Coriolis-Massedurchflussmessgerät 1. Neben den in Fig. 5 dargestellten Schritten wird zusätzlich in Schritt 109 die Abweichung der beiden Vergleichswerte $D_{ref}$ und $D_{mess}$ durch die Gleichung:

$$E = \frac{D_{mess} - D_{ref}}{D_{ref}}$$

bestimmt. Wenn die Abweichung E einen zuvor festgelegten Grenzwert überschreitet, wird von der Auswerteeinrichtung 5 ein Signal ausgegeben. Der Betreiber des Coriolis-Massedurchflussmessgeräts 1 kann daran erkennen, dass sich der Zustand des Messgeräts verändert hat und notfalls Schritte einleiten, um den gewünschten Zustand wieder herzustellen.

**Patentansprüche**

1. Verfahren zum Betreiben eines Coriolis-Massedurchflussmessgeräts (1), wobei das Coriolis-Massedurchflussmessgerät (1) wenigstens ein Messrohr (2), wenigstens einen Schwingungserzeuger (3), wenigstens zwei Schwingungsaufnehmer (4) und wenigstens eine Auswerteeinrichtung (5) aufweist, wobei die Schwingungsaufnehmer (4) und/oder der Schwingungserzeuger (3) jeweils mindestens einen Permanentmagneten (6) und jeweils mindestens eine Spule (7) umfassen, wobei der Schwingungserzeuger (3) das Messrohr (2) zu Schwingungen anregt, wobei die Schwingungsaufnehmer (4) die Schwingungen des Messrohrs (2) erfassen, wobei die Temperatur des Messrohrs (2) bestimmt wird und wobei die Auswerteeinrichtung (5) die erfassten Schwingungssignale verarbeitet und Zustandsgrößen des Coriolis-Massedurchflussmessgeräts (1) bestimmt,
**dadurch gekennzeichnet,**
**dass** die elektrische Impedanz der Spule (7) des Schwingungserzeugers (3) und/oder die elektrische Impedanz wenigstens einer Spule (7) der Schwingungsaufnehmer (4) ermittelt wird, wobei die erfasste Impedanz der Spule ein zuverlässiger Indikator für die Temperatur der Spule und für die Temperatur des in unmittelbarer Nähe vorgesehenen Permanentmagneten ist, und dass die Auswerteeinrichtung (5) mindestens eine temperaturabhängige Zustandsgröße D berechnet, wobei die temperaturabhängige Zustandsgröße D unter Verwendung der bestimmten Temperatur des Messrohrs (2) und für eine Kompensation des Einflusses der Temperatur des Permanentmagneten mit der bestimmten Impedanz der mindestens einen Spule (7) der Schwingungsaufnehmer (4) und/oder des Schwingungserzeugers (3) berechnet wird.

2. Verfahren nach Anspruch 1, **dadurch gekennzeichnet, dass** eine Korrektur der Zustandsgröße D auf Basis eines bekannten Temperaturkoeffizienten der Impedanz der mindestens einen Spule (7) der Schwingungsaufnehmer (4) und/oder des Schwingungserzeugers (3) erfolgt.

3. Verfahren nach einem der Ansprüche 1 oder 2, **dadurch gekennzeichnet, dass** für die Zustandsgröße D ein Referenzwert $D_{ref}$ vor Inbetriebnahme des Coriolis-Massedurchflussmessgeräts (1) im laufenden Prozess bestimmt wird.

4. Verfahren nach Anspruch 3, **dadurch gekennzeichnet, dass** der Referenzwert $D_{ref}$ der Zustandsgröße D mit einem im Betrieb bestimmten Wert $D_{mess}$ der Zustandsgröße D verglichen wird.

5. Verfahren nach Anspruch 4, **dadurch gekennzeichnet, dass** bei Überschreiten einer zuvor definierten Abweichung E des Referenzwertes $D_{ref}$ von dem im Betrieb ermittelten Wert $D_{mess}$ der Zustandsgröße D ein Signal von der Auswerteeinrichtung (5) ausgegeben wird.

6. Verfahren nach einem der Ansprüche 3 bis 5, **dadurch gekennzeichnet, dass** die Werte $D_{ref}$ und/oder $D_{mess}$ der temperaturabhängigen Zustandsgröße D unter Verwendung des Zusammenhangs

$$D = a_1 + a_2 \, \Delta \, T + a_3 \, \Delta \, R_{drv}$$

bestimmt wird, wobei $\Delta R_{drv}$ der Änderung der elektrischen Impedanz der mindestens einen Spule (7) der Schwingungsaufnehmer (4) und/oder des Schwingungserzeugers (3) bezogen auf einen vorher definierten Referenzwert, und $\Delta T$ der Änderung der Messrohrtemperatur bezogen auf einen zuvor bestimmten Referenzwert und $a_i \in \mathbb{R}$ entsprechen.

7. Verfahren nach einem der Ansprüche 1 bis 6, **dadurch gekennzeichnet, dass** die Zustandsgröße D in Abhängigkeit von der Steifigkeit des Messrohrs (2) berechnet wird.

8. Verfahren nach einem der Ansprüche 1 bis 6, **dadurch gekennzeichnet, dass** die Zustandsgrößen in Abhängigkeit von der Dämpfung des Messrohrs (2) berechnet werden.

9. Verfahren nach einem der Ansprüche 1 bis 6, **dadurch gekennzeichnet, dass** die Zustandsgrößen in Abhängigkeit von der Masse des Messrohrs (2) berechnet werden.

**Claims**

1. Method for operating a Coriolis mass flowmeter (1), wherein the Coriolis mass flowmeter (1) has at least one measuring tube (2), at least one oscillation generator (3), at least two oscillation sensors (4) and at least one evaluation unit (5), wherein the oscillation sensors (4) and/or the oscillation generator (3) each comprise at least one permanent magnet (6) and in each case at least one coil (7), wherein the oscillation generator (3) excites the measuring tube (2) to oscillations, wherein the oscillation sensors (4) detect the oscillations of the measuring tube (2), wherein the temperature of the measuring tube (2) is determined and wherein the evaluation unit (5) processes the detected oscillation signals and determines state variables of the Coriolis mass flowmeter (1), **characterized in that** the electrical impedance of the coil (7) of the oscillation generator (3) and/or the electrical impedance of at least one coil (7) of the oscillation sensors (4) is determined, wherein the detected impedance of the coil is a reliable indicator for the temperature of the coil and for the temperature of the permanent magnet provided in the immediate vicinity, and that the evaluation unit (5) calculates at least one temperature-dependent state variable D, wherein the temperature-dependent state variable D is calculated using the determined temperature of the measuring tube (2) and with the determined impedance of the at least one coil (7) of the oscillation sensors (4) and/or the oscillation generator (3) for compensation of the influence of the temperature of the permanent magnet.

2. Method according to claim 1, **characterized in that** the state variable D is corrected on the basis of a known temperature coefficient of the impedance of the at least one coil (7) of the oscillation sensors (4) and/or the oscillation generator (3).

3. Method according to claim 1 or 2, **characterized in that** a reference value $D_{ref}$ is determined for the state variable D before the Coriolis mass flowmeter (1) is put into operation.

4. Method according to claim 3, **characterized in that** the reference value $D_{ref}$ of state variable D is compared to a value $D_{mess}$ of state variable D determined during operation.

5. Method according to claim 4, **characterized in that** when a previously defined deviation E of the reference value $D_{ref}$ from the value $D_{mess}$ of the state variable D determined in operation is exceeded, a signal is output by the evaluation unit (5).

6. Method according to any one of claims 3 to 5, **characterized in that** the values $D_{ref}$ and/or $D_{mess}$ of the temperature-dependent state variable D are determined using the relationship

$$D = a_1 + a_2 \Delta T + a_3 \Delta R_{drv}$$

wherein $\Delta R_{drv}$ is the change in the electrical impedance of the at least one coil (7) of the oscillation sensors (4) and/or the oscillation generator (3) relative to a previously defined reference value, and $\Delta T$ corresponds to the change in the measuring tube temperature relative to a previously determined reference value, and $a_i \in \mathbb{R}$

7. Method according to any one of claims 1 to 6, **characterized in that** the state variable D is calculated in dependence on the rigidity of the measuring tube (2).

8. Method according to any one of claims 1 to 6, **characterized in that** the state variables are calculated in dependence on the damping of the measuring tube (2).

9. Method according to one of claims 1 to 6, **characterized in that** the state variables are calculated in dependence on the mass of the measuring tube (2).

## Revendications

1. Procédé pour faire fonctionner un appareil de mesure de débit massique Coriolis (1), dans lequel l'appareil de mesure de débit massique Coriolis (1) présente au moins un tube de mesure (2), au moins un générateur de vibrations (3), au moins deux enregistreurs de vibrations (4) et au moins un dispositif d'évaluation (5), dans lequel les enregistreurs de vibrations (4) et/ou le générateur de vibrations (3) comprennent chacun au moins un aimant permanent (6) et chacun au moins une bobine (7), dans lequel le générateur de vibrations (3) met le tube de mesure (2) en vibration, dans lequel les capteurs de vibrations (4) détectent les vibrations du tube de mesure (2), dans lequel on détermine la température du tube de mesure (2) et dans lequel le dispositif d'évaluation (5) traite les signaux de vibrations détectés et détermine des grandeurs d'état de l'appareil de mesure de débit massique Coriolis (1), **caractérisé en ce que** l'on détermine l'impédance électrique de la bobine (7) du générateur de vibrations (3) et/ou l'impédance électrique d'au moins une bobine (7) des capteurs de vibrations (4), dans lequel l'impédance détectée de la bobine est un indicateur fiable pour la température de la bobine et pour la température de l'aimant permanent prévu à proximité immédiate, et **en ce que** le dispositif d'évaluation (5) calcule au moins une grandeur d'état D dépendant de la température, dans lequel on calcule la grandeur d'état D dépendant de la température en utilisant la température détectée du tube de mesure (2) et pour une compensation de l'influence de la température de l'aimant permanent avec l'impédance déterminée de ladite au moins une bobine (7) des capteurs de vibrations (4) et/ou du générateur de vibrations (3).

2. Procédé selon la revendication 1, **caractérisé en ce que** l'on effectue une correction de la grandeur d'état D sur la base d'un coefficient de température connu de l'impédance de ladite au moins une bobine (7) des capteurs de vibrations (4) et/ou du générateur de vibrations (3).

3. Procédé selon une des revendications 1 ou 2, **caractérisé en ce que** l'on détermine pour la grandeur d'état D une valeur de référence $D_{ref}$ avant la mise en service de l'appareil de mesure de débit massique Coriolis (1) dans le processus en cours.

4. Procédé selon la revendication 3, **caractérisé en ce que** l'on compare la valeur de référence $D_{ref}$ de la grandeur d'état D avec une valeur $D_{mes}$ de la grandeur d'état D déterminée en fonctionnement.

5. Procédé selon la revendication 4, **caractérisé en ce que**, en cas de dépassement d'un écart défini au préalable E de la valeur de référence $D_{ref}$ avec la valeur $D_{mes}$ de la grandeur d'état D déterminée en fonctionnement, un signal est émis par le dispositif d'évaluation (5).

6. Procédé selon l'une quelconque des revendications 3 à 5, **caractérisé en ce que** l'on détermine les valeurs $D_{ref}$ et/ou $D_{mes}$ de la grandeur d'état dépendant de la température en utilisant la relation

$$D = a_1 + a_2 \, \Delta T + a_3 \, \Delta R_{drv}$$

dans laquelle $\Delta R_{drv}$ correspond à la variation de l'impédance électrique de ladite au moins une bobine (7) des capteurs de vibrations (4) et/ou du générateur de vibrations (3) par rapport à une valeur de référence définie au préalable, et $\Delta T$ correspond à la variation de la température du tube de mesure par rapport à une valeur de référence définie au préalable, et $a_i \in R$.

7. Procédé selon l'une quelconque des revendications 1 à 6, **caractérisé en ce que** l'on calcule la grandeur d'état D en fonction de la rigidité du tube de mesure (2) .

8. Procédé selon l'une quelconque des revendications 1 à 6, **caractérisé en ce que** l'on calcule les grandeurs d'état en fonction de l'amortissement du tube de mesure (2) .

9. Procédé selon l'une quelconque des revendications 1 à 6, **caractérisé en ce que** l'on calcule les grandeurs d'état en fonction de la masse du tube de mesure (2).

EP 3 045 877 B1

Fig. 1

Fig. 2

Fig. 3

Fig. 4

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102012011934 A1
- DE 102008059920 A1

- WO 2012018323 A1